Europäisches Patentamt

European Patent Office

Office européen des brevets

(11) Publication number: **0 503 876 B1**

# EUROPEAN PATENT SPECIFICATION

(45) Date of publication of patent specification: **05.07.95** (51) Int. Cl.6: **C10G 11/05, B01J 29/06**

(21) Application number: **92301995.4**

(22) Date of filing: **09.03.92**

(54) **Preparation of cracking catalysts, and cracking process using them.**

(30) Priority: **12.03.91 US 667853**
**12.03.91 US 667856**

(43) Date of publication of application:
**16.09.92 Bulletin 92/38**

(45) Publication of the grant of the patent:
**05.07.95 Bulletin 95/27**

(84) Designated Contracting States:
**BE DE FR GB IT NL**

(56) References cited:
**EP-A- 0 109 187**
**EP-A- 0 142 313**
**US-A- 4 970 183**

(73) Proprietor: **MOBIL OIL CORPORATION**
**3225 Gallows Road**
**Fairfax,**
**Virginia 22037-0001 (US)**

(72) Inventor: **Absil, Robert Peter Leonard**
**811 St. Regis Court**
**Mantua,**
**New Jersey 08051 (US)**
Inventor: **Chitnis, Girish Keshav**
**3745 Mayfield Lane**
**Chadds Ford,**
**Pennsylvania 19317 (US)**
Inventor: **Herbst, Joseph Anthony**
**60 Bryant Road**
**Turnersville,**
**New Jersey 08012 (US)**
Inventor: **Kowalski, Jocelyn Anne**
**262 Dogwood Lane**
**Clarksboro,**
**New Jersey 08020 (US)**

(74) Representative: **Colmer, Stephen Gary et al**
**Mobil Services Company Limited**
**Patent Department**
**Mobil House**
**50-60 Victoria Street**
**London SW1E 6OB (GB)**

**Description**

This invention relates to the preparation of catalytic cracking catalysts containing phosphate treated zeolites. These catalysts are highly attrition resistant and have the attendant benefits of improved conversion, low coke and dry gas formation and improved octane yield in catalytic cracking.

Both fluid (FCC) and moving-bed catalytic cracking are commercially practised in a cycling mode. During these operations the hydrocarbon feedstock is contacted with hot, active, particulate catalyst without added hydrogen at pressure of up to about 4.5 bar (50 psig) and temperatures sufficient to support the desired cracking. As the hydrocarbon feed is cracked to form more valuable and desirable products, undesirable carbonaceous residue known as "coke" is deposited on the catalyst. The coke contains carbon as well as metals that are present in the feedstock.

In FCC riser cracking the catalyst is a fine powder of about 20-100 micrometers in diameter which is propelled upwardly through a riser reaction zone, fluidized and thoroughly mixed in the hydrocarbon feed. The hydrocarbon feed is cracked at high temperatures by the catalyst and separated into various hydrocarbon products. The coked catalyst particles are separated from the cracked hydrocarbon products, and after purging are transferred into a regenerator where the coke is burnt off to regenerate the catalyst. The regenerated catalyst then flows downwards from the regenerator to the base of the riser.

The cycles of cracking and regeneration at high flow rates and temperatures have a tendency to physically break down the catalyst into smaller particles, called "fines" which have a diameter of up to 20 micrometers as compared to the average diameter of the catalyst particle of about 60 to about 90 micrometers. Excessive attrition increases the cost of catalyst to the refiner.

Commercial catalytic cracking units include cyclones and electrostatic precipitators to prevent fines from becoming airborne. Additionally, the catalyst particles cannot be too large in diameter, or they may not be sufficiently fluidized. Therefore the catalysts are maintained under 120 to 150 micrometers in diameter.

In determining the unit retention of catalysts, and accordingly their cost efficiency, attrition is a key consideration. While the size of the particles can be controlled relatively easily by the initial spray drying of the catalyst, if the attrition rate is high the average particle size may quickly diminish, producing fines which should not be released into the atmosphere.

Additionally, deposition of coke on the catalyst particles is undesirable. It inevitably results in decline in catalytic activity to a point where the catalyst is considered to have become "spent"; and it forms on the catalyst at the expense of the more desired liquid products. To regenerate the catalytic activity, the coke must be burnt off the "spent" catalyst at elevated temperatures in a regenerator.

Current worldwide refinery trends indicate a continuing need to process heavier feed stock. As a result, many refineries process feedstock containing resids or deeper cut gas oils which have high metals contents. The enhancement of octane produced in catalytic cracking operations is an important goal in the preparation of zeolite containing catalysts. Environmental regulations, and the phaseout of lead additives for gasolines, require refineries to use catalysts which produce increased octane gasolines from heavier metals contaminated feedstock.

US-A-4,970,183 discloses a method of preparing a zeolite-matrix cracking catalyst in which a zeolite, having been treated with phosphate, is either calcined or filtered and washed and then combined with matrix components to form a catalyst composition having enhanced gasoline selectivity and superior thermal stability.

Accordingly, one object of the present invention is to provide a zeolite containing catalyst which has improved attrition resistance.

Another object of the present invention is to provide attrition resistant catalysts which also provide the benefit of increase octane performance.

A still further object of the present invention is to provide attrition resistant and octane enhancing catalysts without further increasing coke or dry gas make.

These and other objects are achieved by the present invention which provides a process for preparing a zeolite containing catalyst which has improved attrition resistance, and causes improved octane with no appreciable change in dry gas and coke make when used during catalytic cracking processes. The catalyst is prepared by modifying the zeolite by treatment with a phosphate containing aqueous solution. The zeolite may include large pore zeolites such as X, Y, USY, REX, REY, RE-USY, dealuminated Y and silica-enriched dealuminated Y; or intermediate pore zeolites such as ZSM-5, ZSM-11, ZSM-22, ZSM-23, ZSM-35, ZSM-48 and ZSM-57; or small pore zeolites such as erionite and ZSM-34, and mixtures thereof, preferably an REY large pore zeolite. Treatment of the zeolite is best accomplished in an aqueous solution, at a pH range from about 2 to about 6, containing a water soluble phosphate compound. The phosphate treatment of the zeolite is preferably carried out by initially deagglomerating the zeolite, preferably in an aqueous slurry in the presence of the phosphate containing solution, such as a solution of ammonium monohydrogen phosphate, ammonium dihydrogen phosphate, triammonium phosphate, ammonium hypophosphate, ammonium orthophosphate, ammonium dihydrogen orthophosphate, ammonium monohydrogen orthophosphate, ammonium hypophosphite, ammonium dihydrogen orthophosphite, and mixtures thereof. The mixture of phosphate modified zeolite and treatment solution is then combined with matrix precursor to form a slurry. The slurry is preferably spray dried to form the catalyst, most preferably having a particle size below 200 micrometers. The catalyst may be used in the catalytic cracking of a hydrocarbon feedstock by contacting the hydrocarbon feedstock under suitable catalytic cracking conditions in an FCC, moving bed or other catalytic cracking apparatus. The catalyst can be used for treating resids in which the hydrocarbon feedstock has a higher average molecular weight, a lower API gravity and/or a higher metals content than gas oil.

Using REY and USY as examples, phosphate pretreatment was shown to provide increased attrition resistance. Surprisingly however, phosphate pretreatment of REY zeolites also caused improved octane with no appreciable change in dry gas and coke make during catalytic cracking. By comparison, the phosphate pretreatment of USY zeolites, although resulting in improved attrition resistance, did not result in appreciable octane gain. The phosphate containing solution may include any water soluble inorganic phosphate salt which produces reactive phosphate ions at the pH range, preferably from about 2 to about 6, at which the zeolite is treated.

Any means for intimately contacting the phosphate containing solution with a zeolite at an acidic pH can be adopted to improve the attrition resistance of the catalyst. It is preferred that the zeolite and phosphate containing solution be deagglomerated as an aqueous slurry, e.g. by ballmilling. This distributes the zeolite into a uniform slurry and allows the leaching of aluminum from the framework of the zeolite and the formation of an aluminum phosphate compound on the surface of the zeolite. It is also preferred that the phosphate solution be dissolved in a suitable dispersant and water prior to contacting with the zeolite. The preferred phosphate solution comprises an aqueous solution of ammonium dihydrogen phosphate at a pH of about 2 to 6. The phosphate compound is preferably combined with the zeolite in a ratio of from about 2 grams to about 15 grams of phosphate compound as phosphorus, per 100 grams of the zeolite, measured by dry weight.

After the zeolite has been pretreated with the phosphate containing solution for a sufficient time to modify the zeolite, the zeolite phosphate treated slurry is combined with a slurry of matrix precursors. The zeolite/matrix slurry suspension is sufficiently mixed before spray drying to form fluidizable catalyst particles, preferably less than 200 micrometers in diameter.

The use of the catalyst of the present invention in catalytic cracking of gas oil or resids results in gasolines having increased octane and no appreciable change in dry gas and coke make, and in a lower rate of attrition of the cracking catalyst. Thus, the preparation of cracking catalysts of the present invention, preferably using REY zeolites, in addition to improving attrition resistance also mimics the performance of catalysts containing USY zeolites.

Not only the zeolite but also the matrix precursors may be pretreated with phosphate to provide even higher attrition resistance. Phosphate treatment of the matrix component alone, however, does not improve the octane performance of the catalyst, as shown by the Examples which follow. Improved attrition resistance is very effectively obtained by phosphate treatment of aluminum oxide containing matrix material, forming aluminum phosphate "glue" in the matrix.

We believe that the improved attrition resistance is caused by the formation of aluminum phosphate gel, which forms on the zeolite surface by leaching of framework aluminum in the acidic medium and acts as a binder. We also believe that depletion of framework aluminum in the zeolite results in the improved octane observed when catalysts of the invention are utilized in catalytic cracking. Thus one of the preferred zeolites to be used in the present invention (REY) has a relatively low framework silica to alumina ratio.

The preparative technique according to the invention thus differs radically from previous catalyst-phosphating proposals which seek principally to enhance yield and thermal stability, in that according to the invention the primary beneficial effect is attrition resistance, frequently with octane enhancement. This shift of effect is accounted for by the fact that the conditions of phosphate treatment employed in the prior art curtail, as by calcination or removal by washing, the possibility of interaction between phosphate and catalyst components. In consequence no phosphate "glue" is able to form.

We also believe that another reason for the increased octane performance of the catalyst of the present invention is the passivation of sodium by the phosphate ions. Metals like sodium ordinarily poison the catalyst, causing reduced octane during catalytic cracking. By removing or locking up sodium (and other metals in the catalyst, such as nickel and vanadium) the phosphate pretreated zeolites in the catalyst produce higher octane without increased coke or dry gas make. We believe that either one, or both of these mechanisms may be acting synergistically, to provide the benefits observed in catalytic cracking with the catalyst of the present invention.

Accordingly, the catalyst of the present invention is particularly suited for cracking heavy feedstocks such as resids, which have higher average molecular weight and lower API gravity than gas oils.

The following examples further illustrate the various features of the present invention, and are not intended in any way to limit the scope of the invention which is defined in the appended claims.

EXAMPLE 1

A control REY catalyst containing (on the basis of weight) 25% REY, 45.3% silica, 3.4% alumina and 26.3% kaolin clay was prepared in accordance with the following method.

A batch of REY zeolite (SMR 6-1801, Davison Chemical Division of W.R. Grace & Co., Baltimore, Md.) weighing 750 grams (dry weight) was mixed with 4.5 grams of dispersant (Marasperse N-22, Reed-Lignin Inc., Greenwich, Conn.) and 1338 grams of DI water and ballmilled in a 3.8 dm$^3$ (one-gallon) porcelain ballmill containing 3.54 kg (7.8 lbs.) of 1.27 cm (1/2 inch) agate stones. After 16 hours, 1638 grams of DI rinse water was added. In a separate stirred vessel, 1736 grams of Kaolin clay (Georgia Kaolin Co., Inc., Elizabeth, N.J.) 86.16% solids, was mixed with 8973.5 grams of sodium silicate (N-Clear, PQ Corp., Valley Forge, Pa.) containing 28.8% $SiO_2$, 8.8% $Na_2O$, and mixed with 42.72 kg (94.1 lbs) of water. The resulting slurry was successively neutralized by 844 grams of 96.2% $H_2SO_4$ and 5.83 kg (12.85 lbs) of aluminum sulfate (General Chemicals Co., Morristown, N.J.) as a solution containing 193 grams $Al_2O_3$. To this gel-clay slurry, 7.13 kg (15.7 lbs) of the zeolite slurry, prepared above, (20.11% solids) was added and homogenized. The resulting slurry was dewatered, reslurried and spray-dried. The spray dryer (Komline-Sanderson, Peapack, N.J.) is operated at approximately 1.43 bar (6 psig) air pressure, with a 0.152 cm (0.06 inch) nozzle at about 250 cc/min. feed-rate using a Moyno feed pump (Springfield, Ohio).

Examples 2-5 describe the phosphate pretreatment of the REY zeolite component during the initial ballmilling step in accordance with the present invention.

EXAMPLE 2

The procedure described in Example 1 was modified by adding 5.76 grams ammonium dihydrogen phosphate $NH_4H_2PO_4$ (98% solids, Alfa Products, Ward Hill, MA.) per 100 grams REY zeolite (by dry weight) during the initial ballmilling step.

EXAMPLE 3

The procedure described in Example 1 was modified by adding 11.52 grams ammonium dihydrogen phosphate per 100 grams REY zeolite (by dry weight) during the initial ballmilling step.

EXAMPLE 4

The procedure described in Example 1 was modified by adding 23.15 grams ammonium dihydrogen phosphate per 100 grams REY zeolite (by dry weight) during the initial ballmilling step.

EXAMPLE 5

The procedure described in Example 1 was modified by adding 46.31 grams ammonium dihydrogen phosphate per 100 grams REY zeolite (by dry weight) during the initial ballmilling step.

EXAMPLE 6

The procedure described in Example 1 was modified by peptizing clay with 5.0 grams of 86.1% $H_3PO_4$ per 100 grams of clay (by dry weight) at the start of the gel-clay slurry preparation procedure. This procedure results in improved bonding of the clay component. The phosphate component, however, is locked into the clay portion of the matrix where it does not benefit the catalytic activity of the zeolite.

EP 0 503 876 B1

EXAMPLE 7

The procedure described in Example 1 was modified by substituting $H_3PO_4$ for $H_2SO_4$ (equivalent basis) during the neutralizing step of the clay slurry preparation.

EXAMPLE 8

The catalyst of Example 1 was post-impregnated with 1N ammonium dihydrogen phosphate solution to incipient wetness, and subsequently dried.

EXAMPLE 9

The procedure of Example 3 was modified by substituting the same dry weight of USY zeolite (Z-14 US, Davison) for REY zeolite.

EXAMPLE 10

This example serves as a control for Example 9. The procedure in Example 1 was modified by substituting the same dry weight of USY zeolite for REY zeolite.

EXAMPLE 11

Another control catalyst was made, as in Example 10, which contained the same dry weight of USY zeolite (SMR 6-1709, Davison Chemical Co.). The catalyst was ion-exchanged with $RE_2O_3$ solution (Davison Specialty Chemical Co., Baltimore, Md.) to give 2.9% (by weight on dry basis) $RE_2O_3$ on the finished catalyst.

EXAMPLE 12

This example describes the preparation of a catalyst in which the clay component was treated with ammonium dihydrogen phosphate during the gel-clay slurry preparation. The catalyst was prepared with the nominal composition (by weight) of 24% REY, 43.7% silica, 3.3% alumina, 25.4% Kaolin clay and 3.6% phosphorus according to the following procedure:

A batch of REY zeolite, (Davison) weighing 750 grams (by dry weight) was mixed with 2.25 grams of Marasperse N-22 dispersant (Reed-Lignin Inc.) and 860 grams of DI water and ballmilled in a 3.8 dm$^3$ (1-gallon) porcelain ballmill containing 3.54 kg (7.8 lbs.) of 1.27 cm (1/2 inch) agate stones. After 16 hours, 1638 grams of DI rinse water was added. In a separate stirred vessel, 456.5 grams of Kaolin clay (Georgia Kaolin Co.) 86.16% solids, was added to 2360 grams of N-Clear (PQ Corporation) containing 28.8% $SiO_2$ and 8.8% $Na_2O$, and mixed with 9.76 kg (21.5 lbs.) of ice water. To this slurry, 207 grams of $NH_4H_2PO_4$ - (Alpha Products) dissolved in 1500 grams of DI water was added. The resultant slurry was successively neutralized with 222 grams of 96.1% $H_2SO_4$ and 1.54 kg (3.39 lbs.) aluminum sulfate (General Chemicals) solution containing 51.16 grams of $Al_2O_3$. To this gel-clay slurry, 1842.8 grams of the REY slurry (20.35% solids) was added and homogenized. The resultant slurry was dewatered, reslurried and spray dried as described in Example 1.

EXAMPLE 13

This example describes the preparation of a REY catalyst in which the zeolite has been contacted with phosphate solution. The catalyst having the nominal composition (by weight) of 94% REY and 6% $P_2O_5$ was prepared as follows:

A batch of REY zeolite (Davison) weighing 375 grams (by dry weight) was mixed with 2.25 grams of Marasperse N-22 dispersant (Reed-Lignin Inc.) and 860 grams of DI water and ballmilled in a 3.8 dm$^3$ (1-gallon) porcelain ballmill containing 3.54 kg (7.8 lbs.) of 1.27 cm (1/2 inch) agate stone. After 16 hours, 626 grams of DI rinse water was added. Separately, a solution (solution C) containing 36.03 grams of $NH_4H_2PO_4$ ammonium dihydrogen phosphate (Alpha Products) dissolved in 260 grams DI water was prepared. The equivalent of 350 grams of REY (by dry weight) in the form of the ballmilled slurry was mixed with solution C for 30 minutes in a stirred vessel, homogenized and spray-dried as described in Example 1. The catalyst could not be tested in a fluidized bed (as described in Example 15) since after

5

calcination the catalyst broke apart.

EXAMPLE 14

The catalysts prepared in Examples 1-13 were tested for their Attrition Index.

Attrition Test

To determine the attrition index of the fluid catalyst, 7.0 cc of sample is contacted in a 1.0 inch U-tube with an air jet formed by passing humidified (60%) air through a 0.07 inch nozzle at 21 liter/minute for 1 hour. The attrition index is defined as the percent of 0-20 micrometer fines generated during the test relative to the amount of >20 micron material initially present:

$$AI = 100 \times \frac{\text{wt\% of fines AA} - \text{wt\% of fines BA}}{\text{wt\% of fines BA}}$$

where AA means after attrition, BA means before attrition and fines means wt% of 0-20 micrometer material. The lower the attrition index, the more attrition resistant is the catalyst.

6

The AI results along with the physical properties of each catalyst are summarized in Table I.

Table I

Physical/Chemical Properties and Attrition Resistance of Cracking Catalysts[1]

| Catalysts of Examples | 1 | 2 | 3 | 4 | 5 | 6 | 7 | 8 | 9 | 10 | 11 | 12 | 13 |
|---|---|---|---|---|---|---|---|---|---|---|---|---|---|
| **Chemical Analysis (db)** | | | | | | | | | | | | | |
| $SiO_2$ | 76.2 | 79.0 | 78.8 | N.D. | N.D. | 79.3 | N.D. | 77.5 | N.D. | 76.6 | 76.6 | 67.8 | N.D. |
| $Al_2O_3$ | 21.0 | 21.8 | 22.0 | N.D. | N.D. | 22.0 | N.D. | 21.6 | N.D. | 20.9 | 20.9 | 18.8 | N.D. |
| Na, ppm | 1270 | 995 | 1440 | 1190 | 1890 | 1855 | 3532 | 630 | 1850 | 1460 | 460 | 2600 | 26,300 |
| P, wt% | N.A. | 0.28 | 0.55 | 0.99 | 1.5 | 0.5 | 5.2 | 1.84 | 0.6 | N.D. | N.A. | 1.66 | 2.15 |
| $RE_2O_3$ wt% | 2.6 | 2.7 | 3.0 | 3.0 | 2.5 | N.D. | 2.9 | 2.8 | N.D. | N.D. | 3.2 | 3.7 | 12.4 |
| **Physical Properties[2]** | | | | | | | | | | | | | |
| PV, cc/gm | 0.42 | 0.40 | 0.31 | 0.38 | 0.39 | 0.36 | 0.37 | 0.28 | 0.33 | 0.39 | - | 0.49 | N.D. |
| SA, $m^2$/gm | 123 | 106 | 109 | 106 | 69 | 89 | 71 | 89 | 100 | 117 | 119 | 97 | N.D. |
| UCS, Å ± 0.3 | 24.47 | 24.41 | 24.43 | 24.32 | 24.35 | 24.41 | 24.37 | 24.37 | 24.27 | 24.29 | 24.33 | 24.33 | N.D. |
| Median Particle Diameter μm | 98 | 103 | 83 | 97 | 87 | 70 | 81 | 77 | 82 | 82 | 83 | 89 | 82 |
| **Particle Size Dist. (wt%)** | | | | | | | | | | | | | |
| 0-20 μm | 0.0 | 0.2 | 0.1 | 0.9 | 0.6 | 0.0 | 0.1 | 0.5 | 0.3 | 0.2 | 0.6 | 0.0 | 0.1 |
| 0-40 μm | 3.8 | 6.7 | 5.0 | 5.6 | 7.3 | 9.5 | 7.2 | 9.6 | 7.0 | 8.8 | 4.4 | 5.0 | 6.2 |
| 0-80 μm | 36.9 | 35.7 | 45.9 | 34.8 | 43.8 | 61.9 | 49.5 | 53.3 | 47.9 | 48.6 | 47.8 | 43.8 | 47.6 |
| **Attrition Index** | | | | | | | | | | | | | |
| a. As is "fresh" | 26 | 29 | 5 | 12 | 17 | 9 | 24 | 17 | 10 | 16 | 14 | 32 | 86 |
| b. Calcined[3] | 14 | 27 | 5 | 8 | 8 | 8 | 17 | 12 | 8 | 13 | 11 | 20[3] | N.D.[4] |
| c. Total (a+b) | 40 | 56 | 10 | 20 | 25 | 17 | 41 | 29 | 18 | 29 | 25 | 52 | N.D.[4] |

(1) All samples are $NH_4^+$ exchanged followed by overnight drying at 121°C (250°F).

(2) After 10 hour steaming at 788°C (1450°F), 45% steam (0 psig) 1 bar.

(3) Air 649°C (1200°F), 2 hrs.

(4) Not determined since catalyst did not survive attrition test.

N.D.: Not Determined
N.A.: Not Added

Comparing the data in Table I for the phosphate treated catalysts of Examples 3, 4, 5, 6, 7, 8, 12 and 13, versus the non-phosphate treated control of Example 1, shows attrition resistance is improved by phosphate pretreatment of either the REY zeolite (Examples 3, 4, 5) or the clay component (Example 6) or post impregnating the catalysts with a phosphate solution (Example 8). No improvement is seen by phosphate treating the matrix (Example 7).

A further comparison of the catalyst prepared in Examples 2, 3, 4 and 5, which contain the phosphate pretreated REY zeolite versus the non-phosphate treated control of Example 1, shows that the catalyst prepared in Example 2 did not show improved attrition resistance due to an insufficient amount of phosphorus being present.

Although an improved attrition resistance was observed in Example 6, the treatment of the clay component with $NH_4 H_2 PO_4$ prior to neutralization and mixing with the zeolite slurry, in accordance with Example 12, did not result in improved attrition resistance. Also, the treatment of the zeolite alone with a solution of $NH_4H_2PO_4$ solution prior to spray drying, as described in Example 13, resulted in a catalyst which after calcination did not survive the Attrition Test.

Accordingly, the phosphate pretreatment of the REY zeolite, rather than phosphate treatment of the other catalyst components such as the matrix or the zeolite/matrix mixture; and, the level of phosphate used in the pretreatment both influenced the improvement observed in attrition resistance of the various REY catalysts tested.

Additionally, catalysts prepared in accordance with Example 9 which contained phosphate treated USY zeolite, versus a control of Examples 10 and 11 also exhibited an improved attrition resistance.

EXAMPLE 15

To demonstrate the effect of phosphate treatment of the various catalytic components, the catalysts prepared in accordance with Examples 1-13 were evaluated in a fixed-fluidized bed (FFB) hydrocarbon catalytic cracking unit at a temperature of 404°C (760°F) and at a catalyst contact time of 1.0 minutes using Joliet Sour Heavy Gas Oil (JSHGO) as a feed and varying the catalyst to oil ratios. The JSHGO charge stock properties are given in Table II.

TABLE II

| Charge Stock | Joliet Sour Heavy Gas Oil (JSHGO) |
|---|---|
| Gravity, API | 24.3 |
| Aniline Pt., °C (°F) | 77.2 (171) |
| Hydrogen, wt% | 12.3 |
| Sulfur, wt% | 1.87 |
| Nitrogen, wt% | 0.10 |
| Basic Nitrogen, ppm | 327 |
| Conradson Carbon, wt% | 0.28 |
| Kinematic Viscosity at 210°F (99°C) | 3.6 |
| Bromide No. | 4.2 |
| R.I. at 70°F (21.1°C) | 1,5080 |
| Molecular Weight | 358 |
| Pour Point, °C (°F) | 29.5 (85) |
| Paraffins, wt% | 23.5 |
| Naphthenes, wt% | 32.0 |
| Aromatics, wt% | 44.5 |
| Aromatic Carbon, 25% | 18.9 |
| Ni, ppm | 0.3 |
| V, ppm | 0.6 |

The FFB results, after interpolation at the same conversion (65 vol% in Examples 1-8 and 11-12; 50 vol% in Examples 9-10), are summarized in Table III.

**Table III**

**Effect of Phosphate Treatment on Catalytic Performance**
(After 10 hours Steaming at 788°C (1450°F), 45% steam, 1 bar)

| Catalysts of Examples | 1 | 2 | 3 | 4 | 5 | 6 | 7 | 8 | 9 | 10 | 11 | 12 |
|---|---|---|---|---|---|---|---|---|---|---|---|---|
| Conversion, Wt% (@ 65 Vol%) | 62.5 | 62.2 | 62.3 | 62.1 | 62.1 | 62.3 | 62.4 | 62.3 | 48.3[1] | 48.4[1] | 62.5 | 62.3 |
| **I. Product Yields** | | | | | | | | | | | | |
| $C_5$+ Gasoline, Wt% | 45.1 | 43.8 | 44.2 | 42.9 | 41.7 | 44.7 | 41.6 | 42.4 | 33.9 | 34.2 | 45.9 | 41.0 |
| Total $C_4$'s, Wt% | 7.9 | 9.4 | 8.9 | 9.6 | 9.8 | 8.0 | 10.3 | 10.1 | 7.3 | 7.1 | 8.3 | 5.4 |
| Dry Gas, Wt% | 6.6 | 6.7 | 6.8 | 7.1 | 7.8 | 7.0 | 7.1 | 7.2 | 5.8 | 5.3 | 6.6 | 8.7 |
| Coke, Wt% | 2.6 | 2.3 | 2.3 | 2.5 | 3.0 | 2.7 | 3.4 | 2.7 | 1.3 | 1.6 | 2.2 | 3.5 |
| **II. Gasoline RON** | 85.2 | 87.5 | 87.0 | 86.9 | 88.3 | 85.6 | 88.4 | 88.5 | 89.4 | 90.2 | 87.3 | 88.1 |
| **III. Conversion, Vol% @ 4:1 Cat:Oil** | 75.6 | 73.1 | 74.1 | 73.3 | 66.4 | 77.0 | 64.4 | 65.4 | 50.6 | 4.4 | 69.1 | 66.6 |
| **IV. $C_3/C_4$ Distribution** | | | | | | | | | | | | |
| n-$C_4$, Wt% | 0.7 | 0.8 | 0.6 | 0.8 | 0.9 | 0.7 | 1.0 | 0.9 | 0.5 | 0.6 | 0.6 | 1 |
| i-$C_4$, Wt% | 3.8 | 4.0 | 4.2 | 4.6 | 5.0 | 3.8 | 5.3 | 4.8 | 2.8 | 2.7 | 3.8 | 3 |
| $C_4^=$, Wt% | 3.4 | 4.6 | 4.1 | 4.2 | 3.9 | 3.5 | 4.0 | 4.4 | 4.0 | 3.8 | 3.9 | 4 |
| $C_3$, Wt% | 3.6 | 3.4 | 3.6 | 3.5 | 3.8 | 3.8 | 3.5 | 3.5 | 3.0 | 3.0 | 3.7 | 4 |

(1) @ 50 Vol% conversion.

As shown in Table III, the REY catalysts provide octane/yield shifts, relative to the untreated control of Example 1, which depend upon which catalyst component has been phosphate treated. The following observations are particularly noteworthy:

1. The catalysts containing the phosphate pretreated REY zeolites of Examples 2, 3, 4, and 5 of the present invention are superior to the other REY containing catalysts tested because they show a 1.7-3.1 octane gain.

2. The REY catalyst containing the phosphate treated clay component of Example 6 shows no observable difference in yield/octane performance.

3. The REY catalyst containing phosphate treated matrix of Example 7 provides higher octane, i-$C_4$ and $C_4^=$, but also provides a higher coke make.

4. The REY catalyst prepared in accordance with Example 12 shows higher octane but lower gasoline yield and higher dry gas and coke make relative to the catalyst of Examples 2-5. The catalyst of Example 13 was not tested in a fluidized bed (as described in Example 15), due to its extremely poor attrition resistance.

5. Surprisingly, in comparing the catalyst prepared in Examples 9 and 10, we note that the phosphate pretreatment of the USY zeolite prepared in Example 9 did not improve octane/yield performance, although improved conversion was observed.

6. Comparison of the phosphate treated REY catalyst prepared in Examples 2-4 with the non-phosphate treated RE-USY catalyst prepared in Example 11, shows similar octane but the catalyst prepared in Examples 2-4 are more active, resulting in higher conversions while showing an equivalent dry gas and coke make, and also provide higher $C_4^=$, and i-$C_4$ yields.

Accordingly, these Examples demonstrate that phosphate pretreatment of REY zeolites during the initial deagglomeration step enhances the attrition resistance and the octane/yield performance of the catalyst containing the phosphate pretreated zeolite.

The following Examples illustrate the case where the zeolite is an intermediate-pore zeolite.

## EXAMPLE 16

A slurry containing 375 grams of dried 55/1 $SiO_2/Al_2O_3$ ZSM-5 crystals and 2.6 grams of Marasperse N-22 dispersant (Daishowa Chemicals Inc., Rothchild, WI) was diluted to 33% solids with DI water and ballmilled for 16 hours in a 3.8 $dm^3$ (one-gallon) porcelain ballmill containing agate stones. After ballmilling, the slurry was recovered and rinse water was added to the slurry to reduce the solids content to 20 wt%. 5106 grams of a Kaolin clay slurry was prepared containing 1953.5 grams of Kaolin (Georgia Kaolin Company, Elizabeth, NJ). The Kaolin clay used in these examples has an average particle size of 2.4 micrometers. An $H_3PO_4$ solution was prepared by adding 275.7 grams of 86% $H_3PO_4$ to 1974 grams of DI water. The $H_3PO_4$ solution was added to the zeolite slurry over an 11 minute period. The pH of the phosphoric acid-treated zeolite slurry was 1.36. Next, the phosphoric acid zeolite slurry was added to the Kaolin slurry over an 11 minute period with stirring. After stirring for an additional 15 minutes, 909 grams of DI water were added; the pH was 1.68. DI water was added to adjust the percentage solids of the slurry to 25%. After homogenization, the slurry was spray dried. The resulting catalyst, identified herein as catalyst A, was calcined for two hours at 649ºC in air.

The attrition indices of the spray-dried and the calcined catalyst were 12 and 8 respectively.

## EXAMPLE 11

In this example the benefits of adding ball clay to the phosphoric acid Kaolin/zeolite slurry are illustrated. The ball clay used has a smaller mean average particle diameter (0.5 vs 2.4 micrometers), a higher organic content (3.3 vs 0.9 wt%), and a higher surface area (25 vs 14 $m^2/g$) than the Kaolin clay. A zeolite slurry containing 375 grams of 55/1 $SiO_2/Al_2O_3$ ZSM-5 (dry basis) at 20% solids was prepared as described in Example 16, 4087.2 grams of a clay slurry was prepared containing 1562.8 grams of Kaolin. 1021.8 grams of a ball clay slurry was prepared containing 390.7 grams of ball clay (Kentucky-Tennessee Clay Company, Mayfield, Kentucky). An $H_3PO_4$ solution was prepared by adding 275 grams of 86% $H_3PO_4$ to 1974 grams of DI water. The $H_3PO_4$ solution was added to the zeolite slurry over a 15 minute period. The Kaolin slurry was then added over an 11 minute period. After 15 minutes of stirring, an additional 909 grams of DI water was added. The ball clay slurry was then added over an 11 minute period. After stirring for 15 minutes, additional DI water was added to adjust the % solids of the slurry to 25%. After homogenization the slurry was spray dried. The resulting catalyst, identifed herein as catalyst B, was calcined for 3 hours at 649ºC in air.

The attrition indices of the spray-dried and the calcined catalysts were 5 and 6, respectively.

EXAMPLE 18

In this example the same phosphorus-treated ZSM-5/clay catalyst was prepared as in Example 17. The resulting catalyst was identified as catalyst C. The attrition indices of the spray-dried and the calcined (649°C for 2 hours) catalysts prepared in the present example were 7 and 7, respectively.

This example confirms the benefits of adding ball clay. For comparative purposes, a similar sample was prepared essentially following the procedure of Example 17 but replacing the ball clay with Kaolin.

EXAMPLE 19

A zeolite slurry containing 375 grams of 55/1 $SiO_2/Al_2O_3$ ZSM-5 (dry basis) at 20% solids was prepared as described in Example 16, 4087.2 grams of a clay slurry was prepared containing 1562.8 grams of Kaolin. 1021.8 grams of a second Kaolin slurry was prepared containing 390.7 grams of clay. In addition, an $H_3PO_4$ solution was prepared by adding 274.5 grams of 86.1% $H_3PO_4$ to 1977.5 grams of DI water. The $H_3PO_4$ solution was added to the zeolite slurry over a 15 minute period. The first Kaolin slurry was then added to the resulting slurry over an 11 minute period. After 15 minutes of stirring, an additional 909 grams of DI water was added; the second Kaolin slurry was then added over an 11 minute period. After stirring for 15 minutes, additional DI water was added to adjust the % solids of the slurry to 25%. After homogenization, the slurry was spray dried. The resulting catalyst, identified herein as catalyst D, was calcined for 2 hours at 649°C in air.

The attrition indices of the spray-dried and the calcined catalysts were 19 and 6, respectively. This confirms that the addition of the ball clay is responsible for the improvement in the attrition index of the spray dried catalyst.

EXAMPLE 20

Catalyst C was steam-deactivated at 787.8°C (1450°F) for 10 hours in 45% steam/55% air at 1 bar (0 psig). The resulting catalyst was blended with a commercially-available REY-type catalyst which had been removed from a commercial FCC unit following oxidative regeneration (catalyst E), to a ZSM-5 concentration of 0.3 wt%. The blend is referred to as catalyst F.

Catalysts E and F were evaluated for cracking a Sour Heavy Gas Oil, having the properties listed in Table IV in a fixed-fluidized bed (FFB) unit at 516°C over a range of catalyst/oil ratios. The performance of these catalysts at 65 vol% conversion was determined via interpolation, while catalytic activity for octane enhancement and selectivity were calculated. The results are shown in Table V.

Table IV

| Properties of Joliet Sour Heavy Gas Oil | |
| --- | --- |
| Pour Point, °C (°F) | 32.2 (90) |
| CCR, wt% | 0.54 |
| K.V. 040°C | N/A |
| K.V. 0100°C | 8.50 |
| Aniline Point, °C (°F) | 76.9 (170.5) |
| Bromine Number | 8.7 |
| Carbon, wt% | 87.1 |
| Hydrogen, wt% | 12.1 |
| Sulfur, wt% | 2.1 |
| Nitrogen, wt% | 0.41 |
| Basic Nitrogen, ppm | 382 |
| Nickel, ppm | 0.3 |
| Vanadium, ppm | 0.4 |
| Iron, ppm | 0.3 |
| Copper, ppm | 20 |
| Sodium, ppm | 1.3 |

## Table V

| Catalyst | E | F |
|---|---|---|
| Yield Distribution wt% (@65 vol% conv.) | | |
| Coke | 5.0 | 4.9 |
| $C_1$-$C_3$ | 7.4 | 11.3 |
| $C_4$ | 7.5 | 9.9 |
| $C_5$+ gasoline | 42.6 | 36.2 |
| LFO | 29.2 | 28.9 |
| HFO | 8.3 | 8.7 |
| RON | 90.7 | 92.9 |
| -change in $C_5$+ Gasoline/change in RON | | 3.5 |
| change in RON/wt% ZSM-5 | | 7.3 |

**Claims**

1. A process for preparing a zeolite cracking catalyst having improved attrition resistance, comprising modifying a zeolite by treating the zeolite with a phosphate containing aqueous solution, which is maintained at a pH of 2 to 6, to form a first aqueous slurry, directly combining said first aqueous slurry containing phosphate-modified zeolite with a matrix precursor to form a second slurry, and spray drying said second slurry to form a catalyst.

2. A process according to claim 1, wherein said zeolite is selected from large pore zeolites and intermediate pore zeolites.

3. A process according to claim 1 or claim 2 wherein the spray drying forms said catalyst particles having a diameter of less than 200 micrometers.

4. A process according to any preceding claim wherein the zeolite is REY.

5. A process according to any preceding claim wherein the treatment of the zeolite with the phosphate containing solution includes deagglomerating the zeolite in the presence of the phosphate containing solution.

6. A process according to any preceding claim wherein said phosphate is present as an inorganic phosphate salt.

7. A process according to any preceding claim wherein the treatment is carried out in the presence of a dispersant.

8. A process according to any preceding claim wherein said phosphate is ammonium monohydrogen phosphate, ammonium dihydrogen phosphate, triammonium phosphate, ammonium hypophosphate, ammonium orthophosphate, ammonium dihydrogen orthophosphate, ammonium monohydrogen orthophosphate, ammonium hypophosphite and/or ammonium dihydrogen orthophosphite.

9. A process according to any preceding claim wherein said phosphate containing solution contains from 2 to 15 grams of phosphate compound, as phosphorus, per 100 grams of zeolite treated, by dry weight.

**10.** A process according to any of claims 2 to 9 wherein said large pore zeolites include X, Y, USY, REX, REY, RE-USY, dealuminated Y and silica-enriched dealuminated Y.

**11.** A process according to any one of claims 2 to 9 wherein said intermediate pore zeolites include ZSM-5, ZSM-11, ZSM-22, ZSM-23, ZSM-35, ZSM-48, and ZSM-57.

**12.** A process according to any one of claims 5 to 11 wherein the deagglomerating of the zeolite is accomplished by ballmilling to distribute the zeolite to a uniform slurry in the presence of the phosphate containing solution and intimately contact the phosphate containing solution with said zeolite.

**13.** Use of a catalyst prepared in accordance with any one of claims 1 to 12 in a process for the fluid catalytic cracking of a hydrocarbon feedstock.

**14.** Use according to claim 13 wherein the feedstock has a higher average molecular weight and lower API gravity than gas oil.

**15.** Use according to claim 13 or claim 14 wherein the feedstock has a higher metals content than gas oil.

**Patentansprüche**

**1.** Verfahren zur Herstellung eines Zeolith-Crackkatalysators mit verbessertem Abriebwiderstand, welches umfaßt: Modifizieren eines Zeoliths durch Behandeln des Zeoliths mit einer phosphathaltigen wäßrigen Lösung, die auf einen pH von 2 bis 6 gehalten wird, um eine erste wäßrige Aufschlämmung zu bilden, direktes Vereinigen der ersten wäßrigen Aufschlämmung, die den phosphatmodifizierten Zeolith enthält, mit einer Matrixvorstufe, um eine zweite Aufschlämmung zu bilden, und Sprühtrockung der zweiten Aufschlämmung, um einen Katalysator zu bilden.

**2.** Verfahren nach Anspruch 1, worin der Zeolith aus Großporen-Zeolithen und Intermediatporen-Zeolithen ausgewählt ist.

**3.** Verfahren nach Anspruch 1 oder 2, worin die Sprühtrockung Katalysatorpartikel mit einem Durchmesser von weniger als 200 Mikrometer bildet.

**4.** Verfahren nach einem vorhergehenden Anspruch, worin der Zeolith REY ist.

**5.** Verfahren nach einem vorhergehenden Anspruch, worin die Behandlung des Zeolith mit der phosphathaltigen Lösung die Deagglomerierung des Zeoliths in Gegenwart der phosphathaltigen Lösung einschließt.

**6.** Verfahren nach einem vorhergehenden Anspruch, worin das Phosphat als ein anorganisches Phosphatsalz vorliegt.

**7.** Verfahren nach einem vorhergehenden Anspruch, worin die Behandlung in Gegenwart eines Dispersionsmittels durchgeführt wird.

**8.** Verfahren nach einem vorhergehenden Anspruch, worin das Phosphat Ammoniummonohydrogenphosphat, Ammoniumdihydrogenphosphat, Triammoniumphosphat, Ammoniumhypophosphat, Ammoniumorthophosphat, Ammoniumdihydrogenorthophosphat, Ammoniummonohydrogenorthophosphat, Ammoniumhypophosphite und/oder Ammoniumdihydrogenorthophosphit ist.

**9.** Verfahren nach einem vorhergehenden Anspruch, worin die phosphathaltige Lösung 2 bis 15 Gramm Phosphatverbindung, als Phosphor, pro 100 Gramm des behandelten Zeoliths, bezogen auf das Trockengewicht, enthält.

**10.** Verfahren nach einem der Ansprüche 2 bis 9, worin die Großporen-Zeolithe X, Y, USY, REX, REY, RE-USY, dealuminiertes Y und Siliciumdioxid-angereichertes dealuminiertes Y einschließen.

**11.** Verfahren nach einem der Ansprüche 2 bis 9, worin die Intermediatporen-Zeolithe ZSM-5, ZSM-11, ZSM-22, ZSM-23, ZSM-35, ZSM-48, und ZSM-57 einschließen.

**12.** Verfahren nach einem der Ansprüche 5 bis 11, worin die Deagglomerierung des Zeoliths durch Kugelmühle-Vermahlung, damit der Zeolith zu einer einheitlichen Aufschlämmung in Gegenwart einer phosphathaltigen Lösung verteilt wird, und durch innigen Kontakt der phosphathaltigen Lösung mit dem Zeolith erzielt wird.

**13.** Verwendung eines in Übereinstimmung mit einem der Ansprüche 1 bis 12 hergestellten Katalysators in einem Verfahren für das katalytische Fließbettcracken eines Kohlenwasserstoffeinsatzmaterials.

**14.** Verwendung nach Anspruch 13, worin das Einsatzmaterial ein höheres mittleres Molekulargewicht und einen niedrigeren API-Grad als Gasöl aufweist.

**15.** Verwendung nach Anspruch 13 oder 14, worin das Einsatzmaterial einen höheren Gehalt an Metallen als Gasöl aufweist.

## Revendications

**1.** Un procédé de préparation d'un catalyseur de craquage zéolitique présentant une résistance à l'attrition améliorée, consistant en la modification d'une zéolite par traitement de la zéolite avec une solution aqueuse contenant du phosphate, laquelle est maintenue à un pH compris entre 2 et 6, pour former une première suspension aqueuse, la combinaison directe de ladite première suspension aqueuse contenant la zéolite modifiée par le phosphate avec un précurseur de matrice pour former une seconde suspension, et le séchage par pulvérisation de ladite seconde suspension pour obtenir le catalyseur.

**2.** Un procédé selon la revendication 1, dans lequel ladite zéolite est choisie parmi les zéolites à pores larges et les zéolites à pores intermédiaires.

**3.** Un procédé selon la revendication 1 ou la revendication 2, dans lequel le séchage par pulvérisation donne lieu à la formation de particules de catalyseur dont le diamètre est inférieur à 200 micromètres.

**4.** Un procédé selon l'une quelconque des revendications précédentes, dans lequel la zéolite est la zéolite REY.

**5.** Un procédé selon l'une quelconque des revendications précédentes, dans lequel le traitement de la zéolite par la solution contenant le phosphate comprend une désagglomération de la zéolite en présence d'une solution contenant le phosphate.

**6.** Un procédé selon l'une quelconque des revendications précédentes, dans lequel ledit phosphate est présent sous la forme d'un sel de phosphate inorganique.

**7.** Un procédé selon l'une quelconque des revendications précédentes, dans lequel le traitement est mis en oeuvre en présence d'un dispersant.

**8.** Un procédé selon l'une quelconque des revendications précédentes, dans lequel le phosphate consiste en phosphate acide de monoammonium, phosphate acide de diammonium, phosphate de triammonium, hypophosphate d'ammonium, orthophosphate d'ammonium, orthophosphate acide de monoammonium, orthophosphate acide de diammonium, hypophosphite d'ammonium et/ou orthophosphite de monoammonium.

**9.** Un procédé selon l'une quelconque des revendications précédentes, dans lequel ladite solution de phosphate contient de 2 à 15 g de dérivé de phosphate, exprimé en phosphore pour 100 g de zéolite traitée, exprimée en poids de matières sèches.

**10.** Un procédé selon l'une quelconque des revendications 2 à 9, dans lequel les zéolites à pore large comprennent les zéolites X, Y, USY, REC, REY, RE-USY, Y désaluminisées et Y désaluminisée enrichie en silice.

11. Un procédé selon l'une quelconque des revendications 2 à 9, dans lequel lesdites zéolites à pore intermédiaires comprennent les zéolites ZSM-5, ZSM-11, ZSM-22, ZSM-23, ZSM-35, ZSM-48 et ZSM-57.

12. Un procédé selon l'une quelconque des revendications 5 à 11, dans lequel la désagglomération de la zéolite est réalisée par broyage dans un broyeur à boulets pour former une suspension uniforme de la zéolite dans une solution contenant du phosphate et permettre le contact intime de la solution contenant le phosphate avec ladite zéolite.

13. Utilisation d'un catalyseur préparé selon l'une quelconque des revendications 1 à 12, dans un procédé de craquage catalytique fluide d'une charge hydrocarbonée.

14. Utilisation selon la revendication 13, dans laquelle la charge présente un poids moléculaire moyen supérieur et une gravité API inférieure à ceux d'un gazole.

15. Utilisation selon la revendication 13 ou selon la revendication 14, dans laquelle la charge présente une teneur en métaux supérieure à celle d'un gazole.